# EUROPEAN PATENT APPLICATION

(11) **EP 1 221 554 A1**
(43) Date of publication of application: **10.07.2002**
(21) Application number: 00830858.7
(22) Date of filing: 28.12.2000
(51) Int. Cl.: F04B 39/10

(54) **Ring valve for reciprocating positive displacement compressor**

(71) Applicant: RC Group S.p.A., 27010 Valle Salimbene (Pavia) (IT)
(72) Inventor: Carumani, Marco, 00043 Ciampino (Roma) (IT)
(74) Representative: Zavattoni, Maria Chiara

(57) **Abstract**

In a reciprocating positive displacement compressor with annular or ring valve(s), particularly for refrigerating equipment, at least one spring-biased suction ring valve is implemented in a plate (64) comprising several layers (65) of fabric in carbon fibre in a resin matrix (66), and possibly one or more layers (67) of fiberglass and/or ceramic and/or aramidic fibre in the vicinity of the surface.

If necessary, it is possible also/instead to implement a delivery ring valve in the same manner.

## Description

The invention refers to the field of reciprocating positive displacement compressors, as are currently widely used in refrigerating equipment. In greater detail, it refers to so-called reciprocating positive displacement compressors with disk valves or ring-shaped (annular) valves.

In these prior art compressors, a first set of ports (intake ports) are arranged circumferentially around the head of a cylinder and connect a gas suction chamber for the gas to be compressed to a gas compression chamber. A second set of ports (delivery ports) arranged according to a second circumference communicates the gas compression chamber with a delivery chamber.

A suction valve cooperates with the first set of ports; said valve comprises a steel ring or annulus spring biased in its closed position against the intake ports; the ring is exposed to gas pressure in the suction chamber and to gas pressure in the compression chamber.

A second steel ring or annular valve cooperates with the second set of ports; the second valve is spring biased in its closed position against the outlet or delivery ports. The ring is exposed to pressure in the compression chamber and to pressure in the delivery chamber.

The suction valve opens and closes automatically in relation to the movement of the piston, that is to say depending on the force generated by the pressure exerted by the fluid in the suction chamber and the force exerted by the spring and by the fluid in the compression chamber.

Similarly, the delivery valve opens or closes automatically in relation to the movement of the piston, that is to say depending on the force generated by the pressure of the fluid in the compression chamber and the force exerted by the springs and by the fluid in the delivery chamber.

The ring valves open and close twenty-four times or more each second. These are currently produced in an extremely hard steel, very strong and rigid, to endure the work to which they are subjected.

A first problem of prior art valves, due to the type of steel that must be used, is the fact that they break easily if for any reason they are subjected to a bending moment. Another problem is that they are subject to fatigue failure. A further problem is that the ring made of hard material can cause wear in the seat with which it cooperates. Yet another problem is that in the case of breakage of the steel ring, the fragments thereof are attracted by the magnetic field of the motor and can cause damage to other parts.

An aim of the present invention is to solve the prior art problems mentioned above. A further aim is to produce a lightweight annular valve at a reduced cost.

These aims are achieved with a ring valve as claimed in claim 1. Further characteristics can be read in the dependent claims. The present application also refers to a compressor that uses such a valve or valves.

The new ring valve for compressors is produced from a sheet or plate of carbon fibre and resin material. In one embodiment, the plate utilised for the valve comprises several layers of carbon fibre fabric and one or more external layers in fibreglass or ceramic or aramidic fabric, all impregnated in an epoxy or phenolic resin matrix. In particular, the fabric for the internal carbon fibre layers is preferably flat or matted, while the external layers are of a satin-finished fabric.

The new valve is obtained from sheet or plate by means of cutting, or machining with a machine tool.

The new valve attains the aforesaid aims; particularly, in case of breakage, it is pulverized without causing damage, does not risk to resonate, causes practically no wear to the seat with which it cooperates, has less kinetic energy and therefore has lighter recoil, allows an increase in compressor yield as, with a same pressure difference there is less kinetic resistance during opening and closing. Moreover, it requires less machining than a traditional steel valve and therefore, it is thought to permit a saving in production costs.

A more detailed description of the invention shall be provided subsequently, with reference to an exemplary unrestrictive embodiment thereof shown in the appended drawings, in which:
Fig. 1 is a longitudinal sectional view through a head of a reciprocating positive displacement compressor having a ring-shaped or annular suction valve and a ring-shaped or annular delivery valve, according to the invention; the sectional view is taken in a plane containing the axes of the compressor cylinders;
Fig. 2 is a broken-away sectional view of a cylinder of the compressor in the previous figure, taken along an axial plane, and enlarged in relation to fig. 1;
Fig. 3 is an axonometric view of a compressor cylinder;
Fig. 4 shows, in a broken-away, enlarged sectional view taken along an axial plane, a ring valve and a relevant spring;
Fig. 5 is a top plan view of a ring valve according to the invention, in a different scale from the previous figures;
Fig. 6 is a broken-away schematic and greatly enlarged sectional view of a sheet or plate in carbon fibre and resin, as utilised for the annular valves of the present invention.

A head of a reciprocal positive displacement compressor is referenced 10 as a whole in the figures. Said compressor head houses, inside a casing 12, a pair of cylinder-piston assemblies 1, 2, the cylinders of which are referenced 14 and 16. Inside each cylinder is a movable piston, 18 and 20 respectively, the respective rod 22, 24, of which is operated by a crankshaft (not illustrated) in a per se known manner.

Each cylinder comprises a body, 15 and 17 respectively, and at the end thereof shown at the top of the figure, has a outward facing flange, respectively referenced 26 for cylinder 14 and 28 for cylinder 16. Each flange has intake ports, referenced 30 for cylinder 14 and 32 for cylinder 16. The intake ports 30 communicate the suction chamber CA with the pressure or compression chamber CP1. The intake ports 32 communicates the suction chamber CA with the pressure or compression chamber CP2.

Each piston cooperates with the respective cylinder in a per se known manner and has an upper depression or hollow, 19 and 21 respectively.

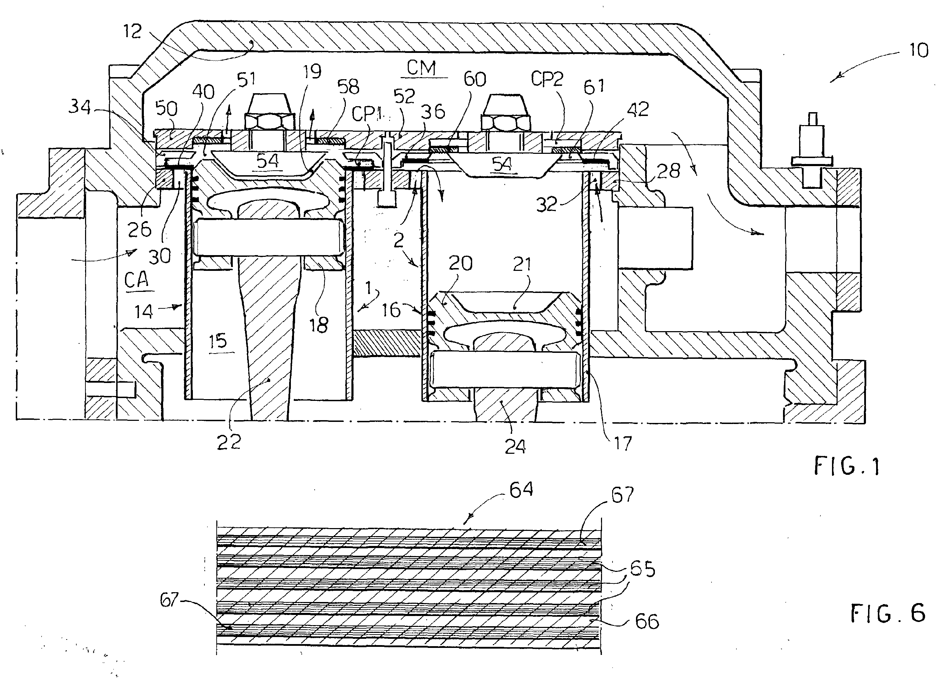

The cylinders are assembled in the casing 12 in a traditional manner, for example on a casing shoulder as shown in fig. 1.

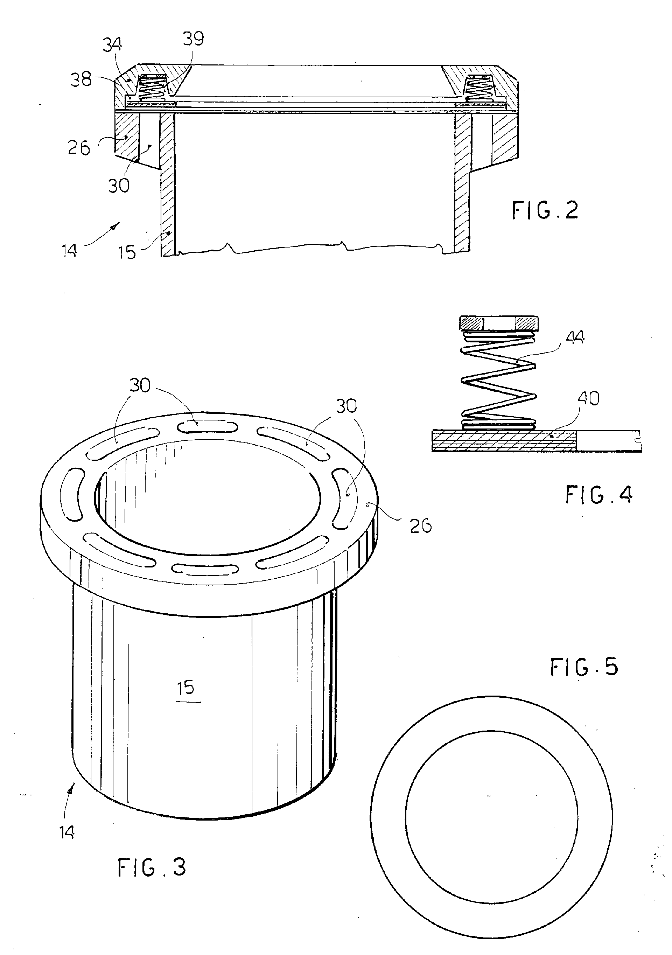

Above the flange of each cylinder the casing has a spring holder or holding component referenced 34 and 36 respectively to hold the spring. Each spring holder component is essentially in the form of a circular crown (continuous or discontinuous) as seen in plan view and has a circumferential seat 38 for the suction valve and seats 39 for the springs. Subsequently only the spring holding component 34 in fig. 2 is described, as the spring holding component 36 is identical to 34.

A ring or annular suction valve (also said "disk valve") is referenced 40 for the cylinder 14. The ring suction valve relevant to the cylinder 16 is 42. Each ring suction valve is biased against the flange 26 or 28 of the respective cylinder by a plurality of springs, that can be seen in figs. 2 and 4 and are referenced 44. The springs are housed partly in respective seats 39 of the spring holding ring component. The seats 38 of the spring holding components are of a height that allows movement of the suction valve from the closed position, against the inlet ports in the flange of the cylinder, to the open position, away from the said inlet ports.

Each cylinder is closed by a relevant cover, 50 and 52 respectively.

A component called crown or top cover of the cylinder, respectively referenced 54 for the cylinder 14 and 56 for the cylinder 16, is fixed to the cover, has a shape suitable to be housed in the upper hollow of each piston and has an abutment surface 54', 56'respectively, (upper in the figure) for a delivery valve. The delivery opening for each cylinder-piston assembly, respectively referenced 51, 61, is defined in an annular form between the external circumference of the crown of the cylinder and the internal circumference of the respective spring holding component, 34 or 36. The delivery opening 51 allows pressure chamber CP1 to communicate with delivery chamber CM. The delivery opening 61 allows pressure chamber CP2 to communicate with delivery chamber CM.

Collaborating with each delivery opening is a ring-shaped or annular delivery valve, referenced 58, 60 respectively, which is housed in a respective seat in the cover in order to move from a closed position to an open position and vice versa. Each delivery valve is biased to the closed position by springs, not shown, which act between it and the cover.

In figure 1, the cylinder piston assembly on the left is shownd in its delivery phase, with the suction valve closed and the delivery valve open; the cylinder-piston assembly on the right is shown in its suction phase, with the suction valve open and the delivery valve closed.

According to the present invention, at least one of the ring valves is produced from a sheet or plate of resin impregnated carbon fibre material.

In a preferred embodiment, shown in fig. 6, the sheet of carbon fibre utilised, referenced 64, comprises several layers of carbon fibre fabric 65, arranged parallel to one another and separated and impregnated with a resin matrix, referenced 66. The fibre fabric can be a flat or matted fabric, which is only slightly deformable. The matrix is preferably in epoxy or phenolic resin. In a preferred embodiment, the sheet further comprises one or more layers 67, either on, or in the vicinity of, the surface, said layers being of fiberglass or ceramic or aramidic fibre, preferably in the form of a satin-finished fabric. The carbon fibre, fiberglass or ceramic fibre fabric is preferably constructed with threads of a thickness of 6-10 micron, each composed of 4000-10000 fibres twisted together. Each single layer of fabric has a weight of 150-400 g. per sq.m..

The carbon fibre mainly sustains the load, acts as a barrier against internal movements and to prevent fractures from spreading inside the matrix, gives stiffness to the composite, is only slightly deformable and ensures maximum stability and optimum distribution of stress.

The fiberglass, ceramic or aramidic fibre gives a good surface finish and a high level of surface hardness, particularly desirable characteristics for the surface intended to cooperate with the surfaces that define the intake and delivery openings.

The matrix distributes or spreads the loads and transfers them to the fibre, holds the fibres together, spaces out the fibres, protects them from the external environment, prevents fissuring from spreading from one fibre to another.

The ring valve can be made from the sheet or plate using known cutting procedures.

## Claims

1. Ring valve for reciprocating positive displacement compressors **characterised in that** it is made of a sheet or plate of material (64) comprising several layers of carbon fibre (65) in a matrix of resin(s) (66).

2. Ring valve as claimed in claim 1, **characterised in that** the said fibre carbon is in the form of a fabric.

3. Ring valve as claimed in claim 2, **characterised in that** the said fabric comprises threads of a thickness of 6-10 micron, composed of 4000-10000 twisted fibres.

4. Ring valve as claimed in claim 1, **characterised in that** the matrix is in epoxy or phenolic resin.

5. Ring valve as claimed in claim 1, **characterised in that** it comprises at least one layer of a fabric in fiberglass or ceramic or aramidic fibre.

6. Ring valve as claimed in claim 5, **characterised in that** the said layer of fiberglass or ceramic fibre is on, or in the proximity of, a face of the sheet or plate material intended to cooperate with hard surfaces which define the openings the said valve is intended to close.

7. Valve as claimed in any of the previous claims, implemented as a suction valve of a compressor.

8. Valve as claimed in any of the previous claims from 1 to 6 implemented as a delivery valve of a compressor.

9. Use of a sheet or plate of material with layers of fabric in carbon fibre in a resin matrix, for ring valves of reciprocating positive displacement compressors.

10. Use of a material as claimed in claim 9, also comprising at least one layer of fiberglass or ceramic or aramidic fibre in the vicinity of the surface.

11. Use of a material as claimed in claim 9 or 10, in which the fabric is constructed of threads each composed of 4000-10000 twisted fibres.

12. Reciprocating positive displacement compressor with ring valve(s), comprising a casing (12) and at least one cylinder-piston assembly (1, 2) which define among them a suction chamber (CA), a compression chamber (CP1, CP2), a delivery chamber (CM), intake ports (30, 32) between the suction chamber and the compression chamber, delivery ports (51, 61) between the compression chamber and the delivery chamber, at least one ring valve (40, 42, 58, 60) to cooperate with the said intake and/or delivery ports, **characterised in that** at least one said ring valve is produced from a sheet or plate of material comprising several layers of fabric in carbon fibre in a resin matrix.

13. Compressor as claimed in claim 12, **characterised in that** the said fabric is formed of threads composed of 4000-10000 fibres, has a thickness of 6-10 micron and a weight from 150 to 400 g. per sq.m..

14. Compressor as claimed in claim 12, **characterised in that** the said material comprises at least one layer of fabric in fibreglass or ceramic or aramidic fibre on, or in the vicinity of, the surface.
